Europäisches Patentamt

European Patent Office

Office européen des brevets

(11) Publication number: **0 272 708 B1**

# EUROPEAN PATENT SPECIFICATION

(45) Date of publication of patent specification: **11.12.91** (51) Int. Cl.⁵: **A22C 25/16**

(21) Application number: **87201830.4**

(22) Date of filing: **23.09.87**

(54) **Apparatus for processing filleted flat-fish.**

(30) Priority: **19.12.86 NL 8603233**

(43) Date of publication of application:
**29.06.88 Bulletin 88/26**

(45) Publication of the grant of the patent:
**11.12.91 Bulletin 91/50**

(84) Designated Contracting States:
**AT BE CH DE ES FR GB GR IT LI LU NL SE**

(56) References cited:
**EP-A- 0 178 370          DE-A- 3 106 185**
**DE-B- 1 062 412          GB-A- 1 027 313**
**GB-A- 1 272 032          US-A- 2 599 694**
**US-A- 2 738 545          US-A- 2 857 621**
**US-A- 4 446 601**

(73) Proprietor: **Meyn Weighing Systems B.V.**
**Noordeinde 68**
**NL-1511 AE Oostzaan(NL)**

(72) Inventor: **Meyn, Pieter**
**Noordeinde 68C**
**NL-1511 AE Oostzaan(NL)**

(74) Representative: **Kupecz, Arpad et al**
**Octrooibureau Los en Stigter B.V. Postbox**
**20052**
**NL-1000 HB Amsterdam(NL)**

Rank Xerox (UK) Business Services

## Description

The invention relates to an apparatus for processing filleted flat-fish according to the precharacterizing portion of claim 1.

When by flat-fish the head and the entrails are removed and the flat-fish are cut along their central longitudinal plane two fillets are obtained of which during further processing the fish-bones and optionally the skin are removed. The fillets obtained in this way each have at their two margins narrow fat brims extending from head to tail. These fat brims are so loosely connected with the remaining part of the fillets that they easily let loose partially and provide the fillets with an unattractive appearance. Therefore in known processing these fat-brims are manually removed. A disadvantage of this method is that it is labour-intensive and thus expensive, whereas the hygienic circumstances are not optimal. Moreover manually removing said fat-brims is an unpleasant job for it is carried out in a cold and wet atmosphere.

From EP-A-0.178.370 an apparatus as set out above is known, of which the processing devices are intended to treat among others the lateral parts of fillets. These processing devices all act in a direction in parallel with the direction of transport of the fillets.

It is an object of the invention to provide an improved apparatus for processing filleted flat-fish.

The characterizing features of the apparatus according to the invention are set out in the characterizing portion of claim 1.

By means of the apparatus according to the invention manually removing the fat-brims becomes superfluous because this is carried out now fully automatically. Because the track of the processing devices includes an angle with the direction of transport the fat-brims are removed laterally from the fillets. This results in an effective removal.

In an advantageous embodiment of the apparatus according to the invention each pair of brush means is positioned V-like, the tip of the V being directed opposite to the direction of transport. With respect to this it is further preferred that the circumferential velocity of the brush means at their point of contact with a fillet to be processed comprises a component equalling the transport velocity. Like this the fat-brims of the fillets are only moved sideways thereby avoiding a mutual displacement of the fat-brims and the fillets in the direction of transport. Such a displacement could lead to the fat-brim breaking apart so that portions of said fat-brim could remain at the fillet.

In a further advantageous embodiment of the apparatus according to the invention the processing devices further comprise loosening means located, as seen in the direction of transport, behind the brush means for fully separating from the fillets the fat-brims already partially removed by the brush means. These loosening devices, that can comprise two endless belts located at both sides of the conveyor means and extending around at least two reversing rolls, the velocity component of said belts in the direction of transport being different from the transport velocity, entirely loosen the fat-brims from the fillets. Then the fat-brims loosened thus can be carried away.

Next the invention will be explained further by means of the drawing that illustrates an embodiment of the apparatus according to the invention.

Fig. 1 shows, partially cut-away, a top view of an embodiment of an apparatus according to the invention in a working position, and

Fig. 2 shows the apparatus of fig. 1 in a not-working position.

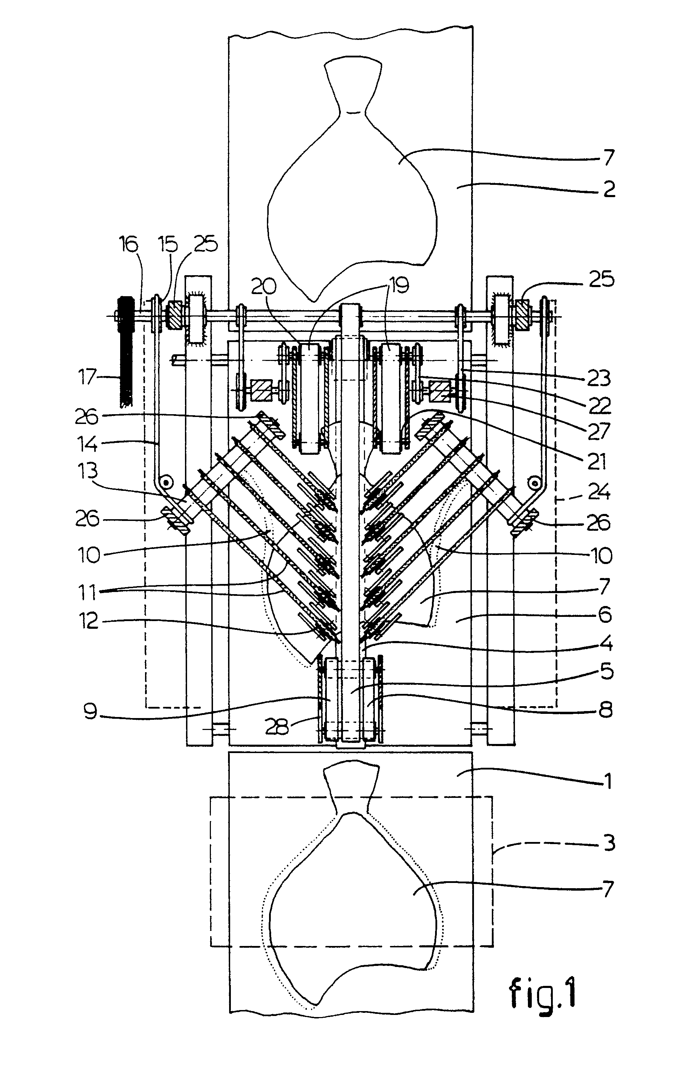

The apparatus for processing filleted flat-fish shown in fig. 1 is positioned in a processing street between a supply unit 1, such as a belt conveyor, and a discharge unit 2, that too may comprise a belt conveyor. As is indicated with dotted lines a skinning device 3 may be provided at the supply unit 1. Although, according to the embodiment shown in fig. 1, the skinning device 3 is positioned at the supply unit 1, it is also possible that this skinning device is part of the apparatus bounded by the supply unit 1 and the discharge unit 2.

The apparatus comprises a conveyor means for moving the fillets in a flat position. This conveyor means exists of two cooperating conveyor belts 4, 5. The one conveyor belt 4 lies substantially at the same elevation as a support surface 6 for fillets to be processed, whereas the other conveyor belt 5 is located at a short distance above the conveyor belt 4. The facing sections of these conveyor belts 4, 5 move with the same velocity and in the same direction. In fig. 1 the direction of motion is from top to bottom. In this way a fillet 7, that is supplied tail first by the supply unit 1, is engaged between the conveyor belts 4 and 5 and, as seen in fig. 1, transported from top to bottom. The conveyor belts 4 and 5 are provided with a fit rough surface for transporting the fillets without the risk of any damages.

As appears clearly from fig. 1, the width of the lower conveyor belt 4, on which the fillet is supported, is substantially less than the width of said fillet 7. In order to attain that the sections of the fillet 7 extending beyond the conveyor belt 4 can slide easily along the support surface 6, it is possible that a spraying device (not shown) is provided for spraying water onto the support surface 6. As a result the friction between the fillet 7 and the support surface 6 will be reduced substantially. Such a spraying device however can be advantageous too in simplifying the discharge of loosened fat-brims, leading, as will appear later, to a special position of said spraying device.

For supplying the fillets 7 to be processed correctly to the apparatus this apparatus comprises at the supply ends of the conveyor belts 4, 5 at both sides of the conveyor belt 5 two short auxiliary conveyor belts 8, 9. The velocity of motion of the sections of these auxiliary conveyor belts 8, 9 engaging the fillets again is equal to the velocity of motion of the corresponding section of the conveyor belts 4 and 5.

Beside the conveyor belt 5 processing devices for removing the fat-brims 10 of the fillets 7 are positioned.

Firstly the processing devices comprise rotating brush means 11. These brush means 11 are positioned such that the track followed by each brush means 11 lies in a plane perpendicular to the plane of transport of the fillets 7, thus perpendicular to the support surface 6. The brush means 11 are all positioned in pairs at both sides of the conveyor belt 5, wherein each pair of brush means 11 is positioned V-like, the tip of the V being directed towards the supply end of the apparatus. The position of the brush means 11 is suoh that they all include an angle of 45° with the conveyor belt 5.

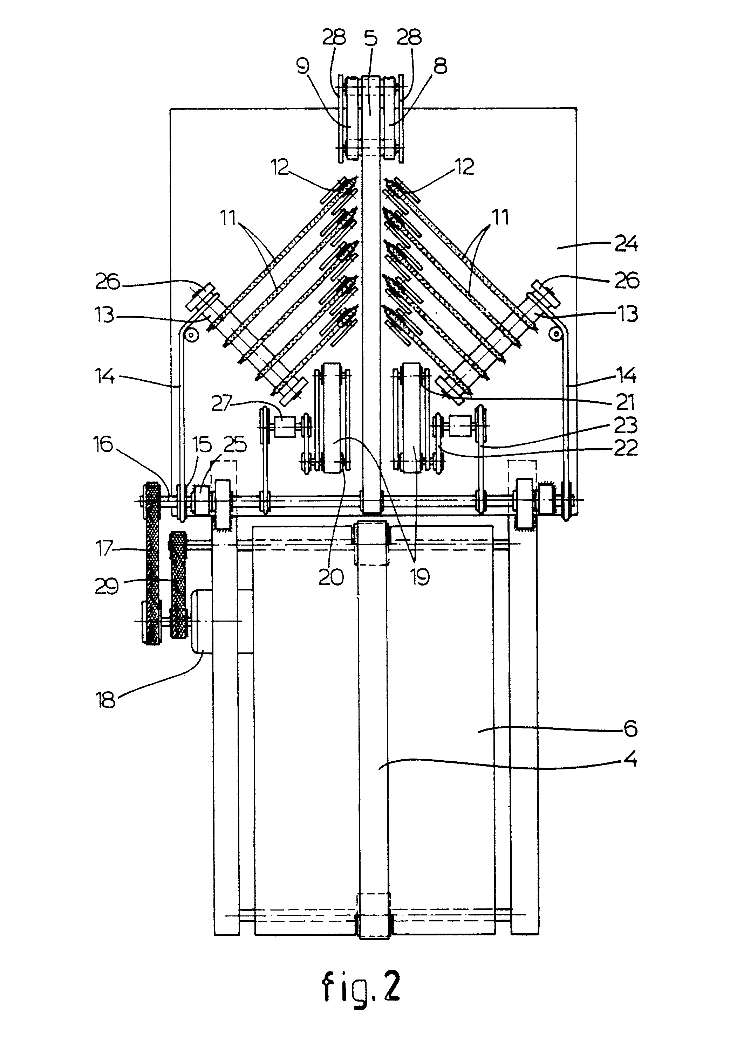

Each brush means 11 comprises an endless belt provided with brush hairs that extends around a first reversing roll 12 and a second reversing roll 13. The reversing roll 13 provides a common driving roll for all brush means 11 positioned at the same side of the conveyor belt 5. Via a belt 14 the reversing roll 13 is connected with a driving wheel 15 being fixedly mounted to a shaft 16 that, via a belt 17, is connected with a motor 18 (fig. 2). By the application of a driving or reversing roll 13, respectively, for all the brush means 11 positioned at the same side of the conveyor belt 5 it is guaranteed that these brush means 11 all have the same circumferential velocity.

For obtaining an optimal function of the brush means 11 it is attained that their circumferential velocity at their point of contact with the fillets 7 to be processed comprises a component equalling the transport velocity of the fillets.

When a fish-fillet 7 to be processed passes the apparatus, the foremost, longer, brush means 11 will firstly contact the fillet 7 and partially loosen the fat-brims 10. For the velocity component of the brush means 11 into the direction of the transport velocity of the fillets equals the said transport velocity, these fat-brims 10 are only subjected to a resulting transverse displacement, thus avoiding that these fat-brims are torn in small pieces. While the fillet is moved also the other, progressively shorter, brush means 11 contact the fat-brims 10. Fig. 1 shows a position in which already a part of the fat-brims of a fillet 7 to be processed has been loosened.

Due to the symmetrical position of the brush means 11 at both sides of the conveyor belt 5 symmetrical forces are excerted on the fillets to be processed, thus effectively avoiding that these fillets are displaced transversely relative to the conveyor belts 4, 5.

It is possible that the brush means 11 have different brush hair densities. As a result an optimal adaption of the brush means 11 to the fillets 7 to be processed can be obtained.

Due to the shown shape of the brush means 11 extending around the reversing rolls 12, being located near to the conveyor belt 5, it cannot be avoided that the brush means 11 do not or hardly engage the fat-brim sections positioned near to the conveyor belt 5. To attain however that the fat-brims 10 are entirely loosened from the fillets 7 to be processed, the processing devices further comprise loosening means 19 that, as seen in the direction of transport, are located behind the brush means. Said loosening means 19 fully remove the fat-brims already partially removed by the brush means 11 from the fillets.

The loosening means 19 comprise two endless belts located at both sides of the conveyor belt 5 that each extend around two reversing rolls 20, 21. The reversing rolls 20 are driven by the shaft 16 via belts 22, 23. However, the gear ratio obtained by the belts 22, 23 is now such that the velocity component of the loosening means 19 in the direction of transport of the fillets 7 to be processed differs from the transport velocity of these fillets. Like this the ends of the fat-brims 10, which are not yet entirely separated from the fillets 7 by the brush means 11, can be separated effectively from the fillets 7.

Contrary to what is illustrated in fig. 1 it is generally advantageous if the loosening means 19 are located at such a distance beside the conveyor belt 5 that they engage only the fat-brims 10 of the fillets 7 to be processed that are already partially removed by the brush means. An adaption to different sizes of the fillets to be processed is possible if the distance between the loosening means 19 is settable (in a way not shown in detail).

In an other embodiment the loosening means 19, that all have a rough surface, just like the brush means 11 may be positioned V-like, the tip of the V again being directed towards the supply side of the apparatus.

Referring to the spraying device mentioned before, it is noted that, as seen in the direction of transport, it is positioned behind the brush means 11. Like this the spraying device has a special function in entirely removing the fat-brims 10 by the loosening means 19.

Further in fig. 1 a frame plate 24 has been illustrated schematically in dotted lines, said plate being pivotably connected with the support surface 6. On said plate the conveyor belt 5 and the processing devices are mounted.

As appears further from fig. 2 the frame plate 24 is, by means of jibs 25, pivotably mounted on the shaft 16. Like this the frame plate 24 can be pivoted relative to the support surface 6 without the need for discoupling the belt 17. The reversing rolls 13 are connected to the frame plate 24 by means of supports 26, whereas bearing blocks 27 form part of the connection between the loosening means 19 and the frame plate 24. Finally support plates 28 form the connection between the frame plate and the ends of the conveyor belt 5 and the auxiliary conveyor belts 8, 9 positioned at the supply side.

In the fold-out position of the apparatus, as shown in fig. 2, all the processing devices and the conveyor belts are well accessible, so that cleaning the apparatus can be carried out easily. Further maintenance can be taken care of now.

Further it can be seen in fig. 2 that the motor 18 drives the lower conveyor belt 4 through a drive belt 29. As appears from the foregoing all parts of the apparatus are driven by just one single motor 18, thus extremely simplifying a synchronisation of these parts.

The invention is not limited to the embodiment described before, but can be varied widely within the scope of the invention as set out by the claims.

**Claims**

1. Apparatus for processing filleted flat-fish, comprising a conveyor means (4, 5) for moving the fillets (7) in a flat position and processing devices (11, 19) positioned beside the conveyor means for removing the fat-brims (10) of the fillets, wherein some of the processing devices comprise rotating brush means (11), and wherein the track followed by each brush means is endless and lies in a plane perpendicular to the plane of transport of the fillets, **characterized** in that the brush means (11) are all positioned in pairs at both sides of the conveyor means (4, 5) and are directed such that the track followed thereby includes an angle with the direction of transport of the fillets.

2. Apparatus according to claim 1, **characterized** in that each pair of brush means (11) is positioned V-like, the tip of the V being directed opposite to the direction of transport.

3. Apparatus according to claim 2, **characterized** in that each brush means (11) encloses an angle of 45° with the direction of transport.

4. Apparatus according to claim 2 of 3, **characterized** in that the circumferential velocity of the brush means (11) at their point of contact with a fillet (7) to be processed comprises a component equalling the transport velocity.

5. Apparatus according to one of the claims 1-4, **characterized** in that each brush means (11) comprises an endless belt with brush-hairs that extends around at least two reversing rolls (12, 13).

6. Apparatus according to one of the claims 1-5, **characterized** in that the brush means (11) have mutually different brush-hair densities.

7. Apparatus according to one of the claims 1-6, **characterized** in that the processing devices (11, 19) further comprise loosening means (19) located, as seen in the direction of transport, behind the brush means (11) for fully separating from the fillets (7) the fat-brims (10) already partially removed by the brush means.

8. Apparatus according to claim 7, **characterized** in that the loosening means (19) comprise two endless belts located at both sides of the conveyor means (4, 5) and extending around at least two reversing rolls (20, 21), the velocity component of said belts in the direction of transport being different from the transport velocity.

9. Apparatus according to claim 8, **characterized** in that said velocity component exceeds the transport velocity.

10. Apparatus according to claim 8 or 9, **characterized** in that the belts (19) of the loosening means are positioned V-like, the tip of the V being directed opposite to the direction of transport.

11. Apparatus according to one of the claims 7-10, **characterized** in that the loosening means (19) are positioned at such a distance beside the conveyor means (4, 5) that they only engage the fat-brims (10) of the fillets (7) that have already partially been removed by the brush means (11).

12. Apparatus according to one of the claims 1-11, **characterized** in that a conveyor belt (5) forming part of the conveyor means and the processing devices (11, 19) can be folded away from a support surface (6) of the fillets (7).

**13.** Apparatus according to claim 12, **characterized** in that the conveyor belt (5) and the processing devices (11, 19) are mounted on a frame plate (24) pivotably connected to the support surface (6).

**14.** Apparatus according to one of the claims 1-13, **characterized** in that a skinning device (3) is positioned ahead of the processing devices, as seen in the direction of transport.

**Revendications**

**1.** Appareil pour le traitement de poissons plats en filets, comportant des moyens transporteurs (4, 5) destinés à déplacer les filets (7) en position à plat et des dispositifs de traitement (11, 19) placés à côté des moyens transporteurs pour enlever les bords adipeux (10) des filets, dans lequel certains des dispositifs de traitement comprennent des moyens à brosses rotatives (11), et dans lequel le chemin suivi par chaque moyen a brosses est sans fin et s'étend dans un plan perpendiculaire au plan de transport des filets, caractérisé en ce que les moyens à brosses (11) sont tous disposés par paires sur les deux côtés des moyens transporteurs (4, 5) et sont dirigés de manière que le chemin qu'ils suivent forme un angle avec la direction de transport des filets.

**2.** Appareil selon la revendication 1, caractérisé en ce que chaque paire de moyens à brosses (11) est disposée à la manière d'un V, la pointe du V étant dirigée en opposition à la direction de transport.

**3.** Appareil selon la revendication 2, caractérisé en ce que chaque moyen à brosses (11) forme un angle de 45° avec la direction de transport.

**4.** Appareil selon la revendication 2 ou 3, caractérisé en ce que la vitesse circonférentielle des moyens à brosses (11) à leur point de contact avec un filet (7) à traiter comprend une composante égale à la vitesse de transport.

**5.** Appareil selon l'une des revendications 1 à 4, caractérisé en ce que chaque moyen à brosses (11) comprend une bande sans fin à soies qui passe autour d'au moins deux rouleaux de renvoi (12, 13).

**6.** Appareil selon l'une des revendications 1 à 5, caractérisé en ce que les moyens à brosses (11) ont des densités de soies mutuellement différentes.

**7.** Appareil selon l'une des revendications 1 à 6, caractérisé en ce que les dispositifs de traitement (11, 19) comprennent en outre des moyens de détachement (19) placés, comme vu dans la direction de transport, en arrière des moyens à brosses (11) pour séparer complètement des filets (7) les bords adipeux (10) déjà partiellement enlevés par les moyens à brosses.

**8.** Appareil selon la revendication 7, caractérisé en ce que les moyens de détachement (19) comprennent deux bandes sans fin placées sur les deux côtés des moyens transporteurs (4, 5) et passant sur au moins deux rouleaux de renvoi (20, 21), la composante de vitesse desdites bandes dans la direction de transport étant différente de la vitesse de transport.

**9.** Appareil selon la revendication 8, caractérisé en ce que ladite composante de vitesse dépasse les vitesses de transport.

**10.** Appareil selon la revendication 8 ou 9, caractérisé en ce que les bandes (19) des moyens de détachement sont disposées à la manière d'un V, la pointe du V étant dirigée en opposition à la direction de transport.

**11.** Appareil selon l'une des revendications 7 à 10, caractérisé en ce que les moyens de détachement (19) sont placés à une distance telle, à côté des moyens transporteurs (4, 5), qu'ils portent seulement sur les bords adipeux (10) des filets (7) qui ont déjà été partiellement enlevés par les moyens à brosses (11).

**12.** Appareil selon l'une des revendications 1 à 11, caractérisé en ce qu'une bande transporteuse (5) faisant partie des moyens transporteurs et les moyens de traitement (11, 19) peuvent être repliés à l'écart d'une surface (6) de support des filets (7).

**13.** Appareil selon la revendication 12, caractérisé en ce que la bande transporteuse (5) et les dispositifs de traitement (11, 19) sont montés sur une plaque de bâti (24) reliée de façon pivotante à la surface (6) de support.

**14.** Appareil selon l'une des revendications 1 à 13, caractérisé en ce qu'un dispositif de pelage (3) est placé en avant des dispositifs de traitement, comme vu dans la direction de transport.

## Patentansprüche

1. Apparat zur Behandlung filetierter Plattfische, mit einem Fördermittel (4, 5) zum Vorbewegen der Filets (7) in einer flachen Lage und mit neben dem Fördermittel angeordneten Verarbeitungseinrichtungen (11, 19) zum Entfernen der Fettränder (10) der Filets, wobei einige der Verarbeitungseinrichtungen rotierende Bürstenmittel (11) aufweisen und die von jedem Bürstenmittel verfolgte Bahn endlos ist und in einer zur Transportebene der Filets senkrechten Ebene liegt, **dadurch gekennzeichnet,** daß alle Bürstenmittel (11) paarweise auf beiden Seiten des Fördermittels (4, 5) angeordnet und so gerichtet sind, daß die von ihnen verfolgte Bahn einen Winkel mit der Transportrichtung der Filets einschließt.

2. Apparat nach Anspruch 1, dadurch gekennzeichnet, daß jedes Paar von Bürstenmitteln (11) V-förmig angeordnet ist, wobei die V-Spitze der Transportrichtung entgegen gerichtet ist.

3. Apparat nach Anspruch 2, dadurch gekennzeichnet, daß jedes Bürstenmittel (11) einen Winkel von 45° mit der Transportrichtung einschließt.

4. Apparat nach Anspruch 2 oder 3, dadurch gekennzeichnet, daß die Umfangsgeschwindigkeit der Bürstenmittel (11) an ihrem Berührungspunkt mit einem zu verarbeitenden Filet (7) eine mit der Transportgeschwindigkeit übereinstimmende Komponente aufweist.

5. Apparat nach einem der Ansprüche 1 bis 4, dadurch gekennzeichnet, daß jedes Bürstenmittel (11) ein endloses Band mit Bürstenhaaren aufweist, welches sich um wenigstens zwei Umkehrrollen (12, 13) erstreckt.

6. Apparat nach einem der Ansprüche 1 bis 5, dadurch gekennzeichnet, daß die Bürstenmittel (11) wechselweise unterschiedliche Bürstenhaardichten aufweisen.

7. Apparat nach einem der Ansprüche 1 bis 6, dadurch gekennzeichnet, daß die Verarbeitungseinrichtungen (11, 19) fernerhin in Transportrichtung gesehen hinter den Bürstenmitteln (11) angeordnete Lösemittel (19) zum vollständigen Abtrennen der von den Bürstenmitteln bereits teilweise entfernten Fettränder aufweisen.

8. Apparat nach Anspruch 7, dadurch gekennzeichnet, daß die Lösemittel (19) zwei endlose Bänder aufweisen, die auf beiden Seiten des Fördermittels (4, 5) angeordnet sind und sich um wenigstens zwei Umlenkrollen (20, 21) erstrecken, wobei die in Transportrichtung liegende Geschwindigkeitskomponente dieser Bänder von der Transportgeschwindigkeit abweicht.

9. Apparat nach Anspruch 8, dadurch gekennzeichnet, daß die genannte Geschwindigkeitskomponente die Transportgeschwindigkeit übersteigt.

10. Apparat nach Anspruch 8 oder 9, dadurch gekennzeichnet, daß die Bänder (19) der Lösemittel (19) V-förmig angeordnet sind, wobei die V-Spitze der Transportrichtung entgegen gerichtet ist.

11. Apparat nach einem der Ansprüche 7 bis 10, dadurch gekennzeichnet, daß die Lösemittel (19) in einer solchen Entfernung neben dem Fördermittel (4, 5) angeordnet sind, daß sie nur an den bereits teilweise von den Bürstenmitteln (11) entfernten Fetträndern (10) der Filets (7) angreifen.

12. Apparat nach einem der Ansprüche 1 bis 11, dadurch gekennzeichnet, daß ein Förderband (5), welches Teil des Fördermittels ist, und die Verarbeitungseinrichtungen (11, 19) von der Tragfläche (6) der Filets (7) wegschwenkbar sind.

13. Apparat nach Anspruch 12, dadurch gekennzeichnet, daß das Förderband (5) und die Verarbeitungseinrichtungen (11, 19) auf einem verschwenkbar mit der Tragfläche (6) verbundenen Rahmenplatte (24) montiert sind.

14. Apparat nach einem der Ansprüche 1 bis 13, dadurch gekennzeichnet, daß eine Enthäutungseinrichtung (3) in Transportrichtung gesehen vor den Verarbeitungseinrichtungen angeordnet ist.

fig.1

fig.2